# EUROPÄISCHE PATENTANMELDUNG

(11) **EP 4 262 152 A1**
(43) Veröffentlichungstag der Anmeldung: **18.10.2023**
(21) Anmeldenummer: 22168522.5
(22) Anmeldetag: 14.04.2022
(51) Int. Cl.: H04L 12/10, H04L 12/40

(54) **BUSVERSORGUNGSKOMPONENTE ZUR VERWENDUNG IN EINEM BUSSYSTEM EINES ZUTRITTSKONTROLLSYSTEMS FÜR EIN GEBÄUDE SOWIE ENTSPRECHENDES ZUTRITTSKONTROLLSYSTEM FÜR EIN GEBÄUDE**

(71) Anmelder: GIRA GIERSIEPEN GmbH & Co. KG, 42477 Radevormwald (DE)
(72) Erfinder: Dornseiff, Andred, 51688 Wipperfürth (DE); Hellenbroich, Fabian, 50171 Kerpen (DE)
(74) Vertreter: Angerhausen, Christoph

(57) **Zusammenfassung**

Die Erfindung betrifft eine Busversorgungskomponente zur Verwendung in einem Bussystem eines Zutrittskontrollsystems für ein Gebäude, welche eine Entkopplungsimpedanz zur Entkopplung von Datensignalen von einer Versorgungsspannung aufweist, mit einem ersten Klemmenpaar zum Anschließen der Busversorgungskomponente an ein handelsübliches Netzteil; und mit einem zweiten Klemmenpaar zum Anschließen der Busversorgungskomponente an eine Busleitung,
wobei die Busversorgungskomponente dazu eingerichtet ist, über das zweite Klemmenpaar eine Datenverbindung mit zumindest einer weiteren an das Bussystem angeschlossenen elektronischen Komponente zu ermöglichen, und wobei die Busversorgungskomponente dazu eingerichtet ist, über das zweite Klemmenpaar wahlweise
a) eine Versorgungsspannung für die zumindest eine weitere elektronische Komponente bereitzustellen;
b) eine Versorgungsspannung für die Elektronik der Busversorgungskomponente zu erhalten;
c) keinen Spannungseingang oder Spannungsausgang bereitzustellen.

## Beschreibung

Die Erfindung betrifft eine Busversorgungskomponente zur Verwendung in einem Bussystem eines Zutrittskontrollsystems für ein Gebäude, welche einen Anschluss zum Anschließen der Busversorgungskomponente an ein Bussystem aufweist. Die Erfindung betrifft ferner ein Zutrittskontrollsystem für ein Gebäude mit einer entsprechenden Busversorgungskomponente.

In der Gebäudeautomatisierung, bei Türsprechanlagen oder Zutrittskontrollsysteme werden häufig Zweidraht-Bussysteme verwendet, über die alle Komponenten des Systems Signale (Daten, Audio, Video) austauschen können. Zusätzlich dient diese Busleitung dazu, eine Versorgungsspannung an diese Komponenten zu übertragen. Zur Erzeugung der Versorgungsspannung wird dazu ein zentrales Netzteil verwendet, welches die hohe Netzspannung auf einen ungefährlichen Wert herunterregelt und auf den Bus einspeist. Damit neben der Versorgungsspannung auch Signale über die Busleitung übertragen werden können, beinhaltet das zentrale Netzteil dabei zusätzlich eine Impedanz mit einer passiven oder elektronischen Induktivität in Reihe zur Ausgangsspannung, damit die sehr niedrige Ausgangsimpedanz des Netzteils die Signale auf der Busleitung nicht kurzschließt und damit zerstört. Als zentrales Netzteil kann im Allgemeinen daher nur ein systemspezifisches Gerät (Busnetzteil) verwendet werden. Die Verwendung handelsüblicher Netzteile ist nicht möglich bzw. nur durch eine externe Ergänzung der zusätzlichen Impedanz.

Bei Zutrittskontrollsystemen werden Leseeinheiten an zu sichernden Türen installiert und ermöglichen berechtigten Personen mittels Eingabe eines Codes oder Kenntlichmachung einer biometrischen Eigenschaft (Finger, Gesicht, Iris) den Zutritt. Im Fall einer Zutrittsgewährung wird die Tür über einen Schließmechanismus freigegeben, so dass die Person die Türe öffnen kann. Die Freigabe erfolgt z.B., über einen elektrischen Türöffner, der die Verriegelung einer Tür freigibt. Der Türöffner wird dabei über ein Relais aktiviert, welches sich in der Leseeinheit befinden kann oder in einer weiteren Komponente wie einem Aktor. Wird die Leseeinheit innerhalb einer Türstation eines Türsprechsystems installiert, kann über die Leseeinheit direkt der elektrische Türöffner aktiviert werden, der sonst nur nach einer Ruftatenbetätigung von der gerufenen Wohnungsstation durch einen Bewohner eines Gebäudes aktiviert werden kann. Bewohner einer Wohneinheit bzw. Zutrittsberechtigte eines Gebäudes wird somit ein schneller Zugang ins Gebäude ermöglicht. Da die Leseeinheit neben der Tür installiert ist und von Personen zugänglich ist, besteht ein gewisses Risiko einer Manipulation. Befindet sich das Relais zur Aktivierung des elektrischen Türöffners in der Leseeinheit, kann durch Demontage der Leseeinheit Zugriff auf die Anschlüsse des Relais erreicht werden und der elektrische Türöffner einfach durch Kurzschließen dieser Anschlüsse aktiviert werden, so dass die Tür geöffnet werden kann.

Es ist die Aufgabe der vorliegenden Erfindung eine Busversorgungskomponente bzw. ein Zutrittskontrollsystem bereitzustellen, mit welchem sich die Spannungsversorgung der einzelnen an ein Bussystem gekoppelten elektronischen Komponenten auf unterschiedliche Weise, und insbesondere unabhängig von der verfügbaren Ausgangsleistung eines zentralen Busnetzteils, realisieren lässt.

Demgemäß ist vorgesehen, dass die Busversorgungskomponente eine Entkopplungsimpedanz zur Entkopplung von Datensignalen von einer Versorgungsspannung aufweist, sowie ein erstes Klemmenpaar zum Anschließen der Busversorgungskomponente an ein handelsübliches Netzteil und ein zweites Klemmenpaar zum Anschließen der Busversorgungskomponente an eine Busleitung, wobei die Busversorgungskomponente dazu eingerichtet ist, über das zweite Klemmenpaar eine Datenverbindung mit zumindest einer weiteren an das Bussystem angeschlossenen elektronischen Komponente zu ermöglichen, und wobei die Busversorgungskomponente dazu eingerichtet ist, über das zweite Klemmenpaar wahlweise
a) eine Versorgungsspannung für die zumindest eine weitere elektronische Komponente bereitzustellen;
b) eine Versorgungsspannung für die Elektronik der Busversorgungskomponente zu erhalten;
c) keinen Spannungseingang oder Spannungsausgang bereitzustellen.

Es ist der Vorteil der vorliegenden Erfindung, dass mittels der erfindungsgemäßen Busversorgungskomponente die Möglichkeit besteht, mit einfachen Mitteln ein kostengünstiges sicheres Zutrittskontrollsystem insbesondere auf Basis einer Zweidraht-Busleitung zur Verfügung zu stellen. Das Vorsehen des ersten Klemmenpaars sowie der integrierten Entkopplungsimpedanz ermöglicht es, die Versorgung der Komponenten am Bussystem über ein handelsübliches kostengünstiges Netzteil zu erreichen. Das handelsübliche Netzteil kann dabei ein externes, nur mittelbar über die Busversorgungskomponente mit dem Bussystem verbundenes Netzteil sein. Das handelsübliche Netzteil kann ferner beispielsweise ohne Bussystemspezifikation ausgebildet sein. Die Impedanz, die es ermöglicht, Signale über die Busleitung zu übertragen, wird dabei in eine der an die Busleitung angeschlossenen Komponenten, Leseeinheit oder Aktor, integriert, welche dann jeweils die Busversorgungskomponente verwirklichen. Diese Busversorgungskomponente mit der Impedanz weist dazu zwei Klemmenpaare auf. An das erste Klemmenpaar kann dabei die Versorgungsspannung aus dem Netzteil angeschlossen werden. Das zweite Klemmenpaar stellt eine Busschnittstelle zur Verfügung, aus der über eine angeschlossene Busleitung mittels des am ersten Klemmenpaar angeschlossenen Netzteils eine Versorgungsspannung zur Speisung weiterer Komponenten des Bussystems entnommen werden kann oder alternativ für den Fall, dass kein Netzteil am ersten Klemmenpaar angeschlossen ist, dieses keine Spannung liefert oder die Versorgungsleistung eines zentralen Busnetzteils für alle am Bussystem angeschlossenen Komponenten ausreicht, die Busversorgungskomponente über das zentrale Busnetzteil mit Spannung versorgt wird. Über das zweite Klemmenpaar können ferner zusätzlich zur gegebenenfalls anliegenden Versorgungsspannung Datensignale an weitere an den Bus angeschlossene Komponenten gesendet und/oder von diesen empfangen werden. Die Entkopplungsimpedanz in der Busversorgungskomponente kann dabei zwischen dem ersten Klemmenpaar und dem zweiten Klemmenpaar geschaltet sein.

Somit ist es mit der erfindungsgemäßen Busversorgungskomponente möglich, die als solche ausgebildete Leseeinheit oder den Aktor ohne Änderung der Spezifikation auf unterschiedliche Weise zu betreiben.

Beispielsweise ist ein Solo-Betrieb einer als Busversorgungskomponente ausgebildeten Leseeinheit mit Netzteil und einem über eine Busleitung mit der Leseeinheit verbundenen Aktor möglich, ohne dass dafür ein zentrales Busnetzteil verwendet werden muss.

Ferner ist es möglich, eine als Busversorgungskomponente ausgebildete Leseeinheit direkt an der Busleitung eines Türsprechsystems oder ähnlichen Bussystems mit separatem zentralen Busnetzteil anzuschließen, wobei die Stromversorgung der Leseeinheit variabel entweder vom Netzteil der Leseeinheit oder vom zentralen Busnetzteil erfolgen kann.

Ferner ist es möglich, die als Busversorgungskomponente ausgebildete Leseeinheit in eine modulare Türstation eines Türsprechsystems zu integrieren und über eine dritte elektronische Schnittstelle an diese anzubinden.

Durch Vorsehen einer Entkopplungsimpedanz in der Leseeinheit oder im Aktor kann ein handelsübliches günstiges Netzteil statt eines teuren Busnetzteils verwendet werden. Die Leseeinheit oder der Aktor stellen dabei die Busschnittstelle zur Versorgung weiterer Komponenten am Bus zur Verfügung, die sonst das zentrale Busnetzteil liefert. Die Entkopplungsimpedanz kann beispielsweise durch eine passive und/oder elektronische Induktivität realisiert sein.

Alternativ können die Leseeinheit oder der Aktor mit Busversorgungsfunktion auch über das zweite Klemmenpaar, welches die Busschnittstelle realisiert, mit Strom versorgt werden. Die Versorgungsspannung am ersten Klemmenpaar der Leseeinheit oder des Aktors mit Busversorgungsfunktion kann somit einerseits zum zweiten Klemmenpaar zwecks Versorgung weiterer Komponenten am angeschlossenen Zweidrahtbus weitergeleitet werden oder nur zur lokalen Versorgung der Komponente verwendet werden, wenn diese an der Busleitung eines bestehenden Bussystems angeschlossen ist und die Ausgangsleistung eines vorhandenen Busnetzteils begrenzt ist.

Beispielsweise kann eine Leseeinheit als Busversorgungskomponente ausgebildet sein und die Impedanz zur Entkopplung der Datensignale von dem niederohmigen Spannungsausgang des Netzteils und somit zwei Klemmenpaare aufweisen. In dem Fall kann das Netzteil an das erste Klemmenpaar für die Versorgung an die Leseeinheit angeschlossen sein. An dem zweiten Klemmenpaar kann eine Busleitung angeschlossen und zu einem Aktor geführt werden. Die Elektronik in der Leseeinheit kann dabei direkt aus dem angeschlossenen Netzteil über das erste Klemmenpaar mit Spannung versorgt werden. Der Aktor kann über die Busleitung bzw. das zweite Klemmenpaar ebenfalls vom Netzteil mit Spannung versorgt werden. Zwischen Leseeinheit und Aktor können über die Busleitung Signale ausgetauscht werden. Netzteil und Aktor können innerhalb eines Gebäudes mit beschränktem Zutritt z.B. in einer Unterverteilung installiert sein, die Leseeinheit kann außerhalb des Gebäudes im Bereich einer Tür installiert sein.

Die Leseeinheit kann eine Authentifizierungseinheit zur Authentifizierung von Personen sein. Beispielsweise kann die Leseeinheit zur Eingabe eines Codes und/oder zum Erfassen einer biometrischen Eigenschaft ausgebildet sein. Es kann vorgesehen sein, über das Bussystem mehr als eine Leseeinheit oder einen Aktor in das System zu bringen und somit z.B. einen Aktor von mehreren Leseeinheiten aus zu aktivieren oder von einer Leseeinheit mehrere Aktoren zu aktivieren. Beispielsweise kann vorgesehen sein. dass z.B. durch unterschiedliche Codes oder biometrische Merkmale neben der Türöffnung auch das Ein-/Ausschalten einer Beleuchtung oder Aktivieren/Deaktivieren einer Alarmanlage ausgelöst werden kann. Ist die Leseeinheit eine Code-Tastatur, können von dieser durch Eingabe von vordefinierten Codes gezielt Wohnungsstationen gerufen werden und eine Sprech- bzw. Sprech-Video-Verbindung zu einem Bewohner innerhalb des Gebäudes aufgebaut werden.

Alternativ kann ein Aktor als Busversorgungskomponente ausgebildet sein und somit die zwei Klemmenpaare sowie die Entkopplungsimpedanz aufweisen. An dem ersten Klemmenpaar kann dann das Netzteil, an dem zweiten Klemmenpaar die Busleitung zur Leseeinheit angeschlossen sein. Die Elektronik im Aktor kann wie oben im Zusammenhang mit der Leseeinheit beschrieben entsprechen ebenfalls direkt aus dem angeschlossenen Netzteil über das erste Klemmenpaar versorgt werden. Eine mit dem Aktor gekoppelte Leseeinheit kann über die diese verbindende Busleitung mittels des Netzteils mit Spannung versorgt sein. Zwischen Leseeinheit und Aktor können über die Busleitung Signale ausgetauscht werden. Das Netzteil und der Aktor können wieder innerhalb des Gebäudes installiert sein, die Leseeinheit kann außerhalb des Gebäudes neben der Tür installiert sein.

Es kann vorgesehen sein, dass das erste Klemmenpaar zum Anschließen an eine mit einem Netzteil verbundene zweiadrige Leitung und das zweite Klemmenpaar zum Anschließen an eine Zweidraht-Busleitung ausgebildet sind.

Es kann vorgesehen sein, dass die Busversorgungskomponente dazu ausgebildet ist, dass die Elektronik der Busversorgungskomponente bei Erkennung des Vorhandenseins einer Versorgungsspannung am ersten Klemmenpaar über das erste Klemmenpaar mit Spannung versorgt ist, und bei Erkennung keiner Versorgungsspannung am ersten Klemmenpaar über das zweite Klemmenpaar mit Spannung versorgt ist. Die Funktion, ob das zweite Klemmenpaar in Anwesenheit einer Versorgungsspannung am ersten Klemmenpaar als Versorgungsausgang- oder -eingang arbeiten soll, kann entweder automatisch durch Erkennung der Busspannung am zweiten Klemmenpaar oder über eine Bedienroutine bei der Inbetriebnahme der Leseeinheit erfolgen.

Es kann vorgesehen sein, dass die Erkennung des Vorhandenseins einer Versorgungsspannung automatisch durch Erkennung einer Busspannung am zweiten Klemmenpaar oder über eine Bedienroutine bei der Inbetriebnahme der Busversorgungskomponente erfolgt.

Es ist denkbar, dass die Busversorgungskomponente ferner eine dritte elektrische Schnittstelle zum Integrieren der Busversorgungskomponente in eine modulare Türstation aufweist. Die dritte elektrische Schnittstelle kann dabei zum Anschließen an eine mehradrige Busleitung ausgebildet sein.

Die Erfindung betrifft ferner ein Zutrittskontrollsystem für ein Gebäude, mit einer Mehrzahl über ein Bussystem miteinander gekoppelter Komponenten, welche zumindest eine Leseeinheit und einen Aktor umfassen, wobei die Leseeinheit über eine Busleitung mit dem Aktor zum Ansteuern einer Türschließeinrichtung verbunden ist, wobei die Leseeinheit dazu eingerichtet ist, im Falle einer erfolgreichen Authentifizierung ein Zugangsberechtigungssignal über die Busleitung an den Aktor zu übertragen, und wobei der Aktor dazu eingerichtet ist, ein entsprechendes Steuersignal zur Ansteuerung der Türschließeinrichtung zu erzeugen und das Steuersignal an diese zur Freigabe der Türe zu übertragen, dadurch gekennzeichnet, dass die Leseeinheit und/oder der Aktor als eine Busversorgungskomponente nach einem der Ansprüche 1 bis 4 ausgebildet ist.

Es kann dabei vorgesehen sein, dass die Busversorgungskomponente an ein handelsübliches Netzteil angeschlossen ist, mittels welchem eine Versorgungsspannung zur Speisung der Busversorgungskomponente und/oder zumindest einer weiteren Komponente des Bussystems bereitstellbar ist.

Ferner kann vorgesehen sein, dass das erste Klemmenpaar an das Netzteil angeschlossen und das zweite Klemmenpaar an das Bussystem angeschlossen ist, wobei über das zweite Klemmenpaar die zumindest eine weitere Komponente mit einer Versorgungsspannung gespeist ist und/oder das zweite Klemmenpaar zur Datenübertragung zwischen der Busversorgungskomponente und der zumindest einen weiteren Komponente ausgebildet ist.

Darüber hinaus kann vorgesehen sein, dass das Bussystem ferner ein zentrales Busnetzteil zum Bereitstellen einer Versorgungsspannung für zumindest einen Teil der Mehrzahl Komponenten aufweist.

Außerdem kann vorgesehen sein, dass die in der Busversorgungskomponente enthaltene Elektronik direkt aus dem über das erste Klemmenpaar angeschlossenen Netzteil mit Spannung versorgt wird.

Es ist denkbar, dass das Zutrittskontrollsystem zumindest eine zweite als Busversorgungskomponente ausgebildete Leseeinheit und/oder zumindest einen zweiten als Busversorgungskomponente ausgebildeten Aktor aufweist, und wobei die zumindest eine zweite Busversorgungskomponente über deren zweites Klemmenpaar an das Bussystem angeschlossen ist, wobei die Spannungsversorgung der internen Elektronik der zweiten Busversorgungskomponente durch das zentrale Busnetzteil oder alternativ durch die erste Busversorgungskomponente über das zweite Klemmenpaar erfolgt.

Um das Zutrittskontrollsystem beispielsweise mit mehr als einer Leseeinheit oder Aktor betreiben zu können, ist es möglich, zusätzliche als Busversorgungskomponente ausgebildete Komponenten an das Bussystem anzuschließen und diese auch wie eine Komponente ohne diese Busversorgungsfunktion über das zweite Klemmenpaar an die Zweidraht-Busleitung anzuschließen. Dabei kann das erste Klemmenpaar an ein Netzteil angeschlossen sein oder nicht.

Wenn ein Netzteil am ersten Klemmenpaar angeschlossen ist, ist es immer aktiv, und sorgt in diesem Fall für die lokale Versorgung der Komponente. Alternativ zur direkten Versorgung der internen Elektronik der Busversorgungskomponente über das erste Klemmenpaar aus einem Netzteil kann auch eine Versorgung der Busversorgungskomponente über das zweite Klemmenpaar über die Busleitung erfolgen. Das zweite Klemmenpaar, welches die Busschnittstelle zur Verfügung stellt, kann somit als Ausgang (Spannungsquelle) und Eingang (Spannungseingang) verwendet werden. Die Erkennung, ob das zweite Klemmenpaar Eingang oder Ausgang ist, kann z.B. über das Vorhandensein einer Versorgungsspannung am ersten Klemmenpaar oder über eine Bedienroutine erreicht werden. Die Versorgungsspannung auf dem Bus kann durch eine dritte elektronische Komponente am Bus mit eigener Busversorgungsfunktion und angeschlossenem Netzteil oder durch ein separates Busnetzteil eingespeist sein.

Die direkte Busschnittstelle über das zweite Klemmenpaar der Leseeinheit ermöglicht es, die Leseeinheit direkt an die Busleitung eines Türsprechsystems anzuschließen, um von dieser die an der Busleitung angeschlossenen Aktoren zur Türöffnung oder Lichtsteuerung aktivieren zu können. Die Leseeinheit kann dabei über die Busleitung aus dem zentralen Busnetzteil versorgt werden. Da die Ausgangsleistung des Busnetzteils häufig auf die Anzahl der installierten Teilnehmer (Tür- und Wohnungsstationen, Aktoren) im System abgestimmt ist, kann die Ergänzung einer Leseeinheit oder eines Aktors am Bus zu einer Überlastung des Busnetzteils führen. Ist die Anzahl der Teilnehmer im System hingegen nicht ausgereizt, ist bei Verwendung eines gewöhnlichen Busnetzteils die Ergänzung von einer oder mehreren Leseeinheiten möglich. Um nun auch bei großen ausgereizten Anlagen die Ergänzung von Leseeinheiten oder Aktoren zu gewährleisten, ist es möglich, über das erste Klemmenpaar der erfindungsgemäßen Busversorgungskomponente eine lokale Versorgung der zusätzlichen Leseeinheit oder des Aktors über ein zusätzliches Netzteil zu erreichen. In diesem Fall wird die am ersten Klemmenpaar eingespeiste Versorgungsspannung nicht an das zweite Klemmenpaar weitergeleitet. Das zweite Klemmenpaar kann sich in dem Fall auf eine Datenübertragung zu oder von anderen Bussystemkomponenten beschränken. Die Funktion, ob das zweite Klemmenpaar in Anwesenheit einer Versorgungsspannung am ersten Klemmenpaar als Versorgungsausgang- oder -eingang arbeiten soll, kann entweder automatisch durch Erkennung der Busspannung am zweiten Klemmenpaar oder über eine Bedienroutine bei der Inbetriebnahme der Leseeinheit bzw. des Aktors erfolgen. Der Vorteil der Möglichkeit der Einbindung von Busversorgungskomponenten in versorgungstechnisch ausgereizte Systeme besteht somit unter anderem darin, dass durch das "Mitbringen" einer eigenen Spannungsversorgung das an sich ausgereizte System durch eine beliebig große Anzahl von Busversorgungskomponenten erweiterbar ist. Die Beschränkungen der Teilnehmerzahl ergibt sich dann stattdessen beispielsweise aus der Reduktion der Gesamtimpedanz der Busleitung, die durch jeden Teilnehmer verkleinert wird.

Es ist denkbar, dass im Aktor ein über die Leseeinheit ansteuerbares Relais angeordnet ist, wobei der Aktor mit dem enthaltenen Relais sowie das oder die Netzteile innerhalb eines Gebäudes angeordnet sind, da ein erhöhter Manipulationsschutz durch Verortung des Aktors innerhalb des Gebäudes mit beschränkten Zutrittsrechten besteht. Die Anordnung des Aktors mit dem Relais innerhalb des Gebäudes bietet mehr Sicherheit. Die Verbindung zwischen der Leseeinheit und dem Aktor kann dabei über eine Zwei-Draht-Busleitung erfolgen.

Ferner kann vorgesehen sein, dass die Leseeinheit außerhalb eines Gebäudes im Bereich einer zu sichernden Türe angeordnet ist.

Dabei kann das Zutrittskontrollsystem ferner eine die Leseeinheit aufweisende Türstation und eine Wohnungsstation aufweisen.

Die Türstation kann eine Mehrzahl Steckplätze für einen gleichen Formfaktor aufweisende Türstationskomponenten, wie beispielsweise ein Sprechmodul, ein Kameramodul und/oder ein Ruftastenmodul, aufweisen, wobei die Leseeinheit in einen der Steckplätze einsteckbar ist und über die dritte elektrische Schnittstelle mit der Türstation und den ggf. weiteren Türstationskomponenten koppelbar ist. Beispielsweise kann die Leseeinheit als Code-Tastatur ausgebildet und in die Türstation neben weiteren modularen Komponenten integriert sein.

Über die dritte elektrische Schnittstelle kann die als Leseeinheit ausgebildete Busversorgungskomponente in die modulare Türstation eines Türsprechsystems integriert werden. Der Formfaktor der Leseeinheit entspricht dabei der der weiteren Komponenten der Türstation wie z.B. dem Sprechmodul, dem Kameramodul oder dem Ruftastenmodul. Diese Module können alle über eine für diese Türstation standardisierte Schnittstelle miteinander verbunden werden. Der Anschluss der Türstation an den Zweidrahtbus des Bussystems kann z.B. über das Sprechmodul erfolgen, welches dazu ein Schraubklemmenpaar aufweisen kann. Über die standardisierte Schnittstelle können dann die weiteren in der Türstation verbauten Module vom Sprechmodul aus versorgt werden. Diese standardisierte Schnittstelle kann dabei als mehradrige Busleitung aufgebaut sein, die Versorgungsspannungen und Datensignale sowie optional Video-Signale zwischen den Modulen übertragen kann. Die dritte elektrische Schnittstelle der Leseeinheit kann der standardisierten Schnittstelle zum Anschluss an die mehradrige Busleitung entsprechen. Insbesondere kann dabei vorgesehen sein, dass das erste und zweite Klemmenpaar der Leseeinheit in dieser Betriebsart nicht beschaltet wird.

Weitere Einzelheiten der Erfindung werden anhand der nachstehenden Figuren erläutert. Dabei zeigt:
- Fig. 1a/b: eine Vorder- bzw. eine Rückansicht einer mit einem Fingerprint-Sensor ausgebildeten Leseeinheit;
- Fig. 2: einen beispielhaften Schaltplan eines Zutrittskontrollsystems im Solo-Betrieb;
- Fig. 3: einen beispielhaften Schaltplan eines Zutrittskontrollsystems im Betrieb in einem Türsprechsystem; und
- Fig. 4: einen beispielhaften Schaltplan eines Zutrittskontrollsystems im Betrieb in einer Türstation.

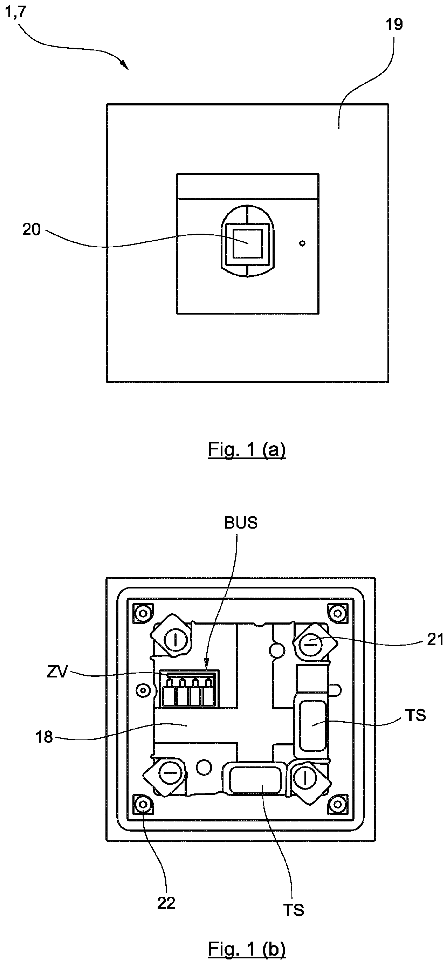

Fig. 1a zeigt die Vorderansicht einer als Busversorgungskomponente 1 ausgebildeten Leseeinheit 7, welche eine Frontplatte 19 sowie einen Fingerprint-Sensor 20 aufweist, mittels welchem eine eine Einlassanfrage stellende Person mittels einer biometrischen Kennung identifiziert werden kann. Fig. 1b zeigt die Rückansicht der Leseeinheit 7, wobei insbesondere das erste Klemmenpaar ZV für den Anschluss eines Netzteils und das zweite Klemmenpaar BUS zum Anschluss der Leseeinheit 7 an eine Busleitung eines Bussystems bzw. an eine weitere elektronische Komponente, wie einen Aktor, zu erkennen ist. Zum Entkoppeln der niederohmigen Spannung des angeschlossenen Netzteils von der Datenverbindung weist die Busversorgungskomponente 1 eine nicht im Detail dargestellte Entkopplungsimpedanz 18 auf. Darüber hinaus ist die dritte elektronische Schnittstelle TS zum Anschließen der Leseeinheit 7 in eine modulare Türstation zu erkennen. Ferner weist die Leseeinheit 7 vier Drehriegel 21 zum Befestigen der Elektronikkomponente in der Türstation bzw. vier Schrauben 22 zum Befestigen der Modulfront an der Elektronikkomponente auf.

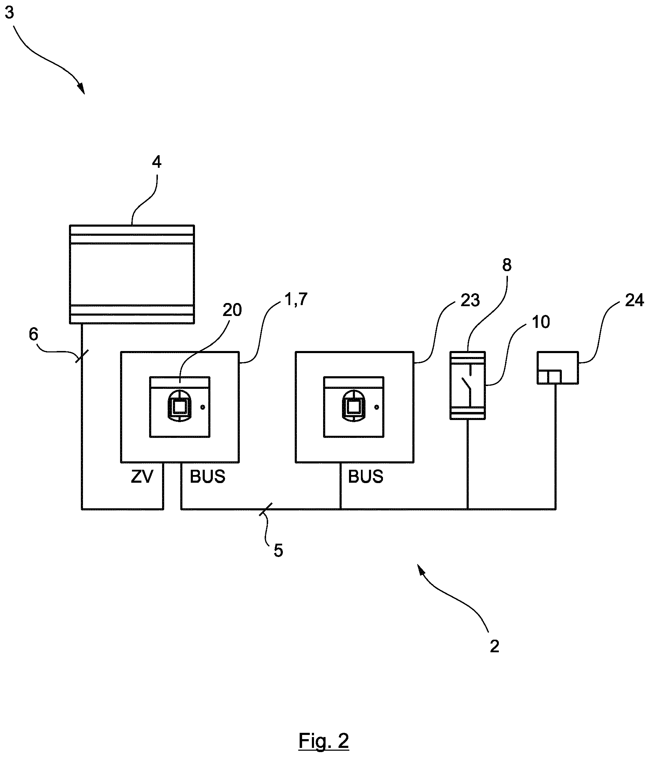

Fig. 2 zeigt einen beispielhaften Schaltplan des Zutrittskontrollsystems 3 im Solo-Betrieb. In dieser Konfiguration weist das Zutrittskontrollsystem 3 eine mit einem Fingerprint-Sensor 20 ausgebildete Leseeinheit 7 als Busversorgungskomponente 1 auf, welche über das erste Klemmenpaar ZV über eine Leitung 6 an ein handelsübliches Netzteil 4 angeschlossen ist. Das Netzteil weist im dargestellten Beispiel eine Spannungsversorgung von 24V Gleichstrom auf und versorgt alle im Beispiel dargestellten Komponenten mit Strom. Es ist daher kein zusätzliches zentrales Busnetzteil notwendig. Das zweite Klemmenpaar BUS der Busversorgungskomponente 1 dient demnach zum einen als Spannungsausgang und zum anderen zur Datenübertragung zwischen den an das Bussystem 2 angeschlossenen Komponenten. An das zweite Klemmenpaar BUS der Leseeinheit 7 ist eine Zweidraht-Busleitung 5 angeschlossen, an welcher ferner eine weitere Leseeinheit 23 angeschlossen ist, deren Klemmenpaar ZV unbeschaltet ist. Im dargestellten Beispiel sind die Leseeinheiten 7 und 23 identische Komponenten, von denen die Leseeinheit 7 über das Klemmenpaar ZV versorgt wird und Spannung über ihr weiteres Klemmenpaar BUS ausgibt, während die Leseeinheit 23 nur über den Bus versorgt wird, sodass ihre Entkopplungsimpedanz ohne Funktion ist. Fig.2 zeigt somit zwei Möglichkeiten zur Verwendung der Leseeinheit, einmal in Form der Leseeinheit 7 als "aktive" Busversorgungskomponente und einmal in Form der Leseeinheit 23 als "passiver" Busteilnehmer, der keine Spannung in den Bus speist. Ferner an die Busleitung 5 angeschlossen sind ein Aktor 8, welcher ein Relais 10 aufweist, das zum Ansteuern einer Türschließeinrichtung dient und eine Tasterschnittstelle 24, mittels welcher das Relais 10 alternativ ansteuerbar ist. Die Tasterschnittstelle wertet die Schaltstellung des Tasters 5 aus und sendet bei Betätigung ein Telegramm auf den Bus zum Aktor.

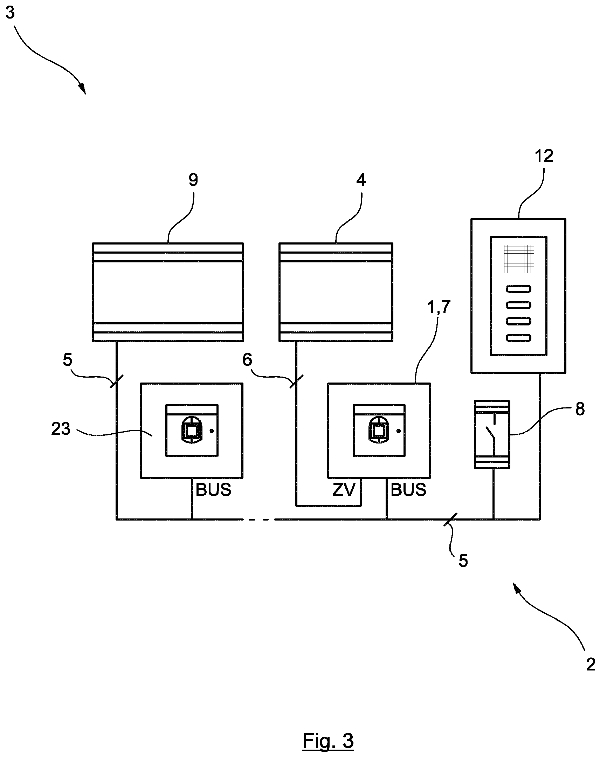

Fig. 3 offenbart einen beispielhaften Schaltplan eines Zutrittskontrollsystems 3 im Betrieb in einem Türsprechsystem. Dieses weist neben einer als Busversorgungskomponente 1 ausgebildeten Leseeinheit 7 mit angeschlossenem handelsüblichen Netzteil 4 ferner eine an das Bussystem 2 angeschlossene weitere Leseeinheit 7 auf, welche im dargestellten Beispiel als passive Buskomponente 23 fungiert. Dabei sind die Leseeinheiten 7 und 23 als identische Geräte ausgebildet, so dass sich der Einsatz als Versorgungskomponente oder als passiver Teilnehmer allein aus der Verschaltung der jeweiligen Komponente ergibt. Weiterhin ist an das Bussystem 2 ein Aktor 8 mit Relais 10 sowie eine Wohnungsstation 12 angeschlossen. Darüber hinaus verfügt das Zutrittskontrollsystem über ein zentrales Busnetzteil 9, das ebenfalls über eine Busleitung 5 an das Bussystem 2 angeschlossen ist. Dieses versorgt bis auf die Busversorgungskomponente 1 alle übrigen Komponenten des Bussystems mit Strom. Die Busversorgungskomponente 1 wird demgegenüber über das Netzteil 4, das an das erste Klemmenpaar ZV der Busversorgungskomponente 1 angeschlossen ist, mit Strom versorgt.

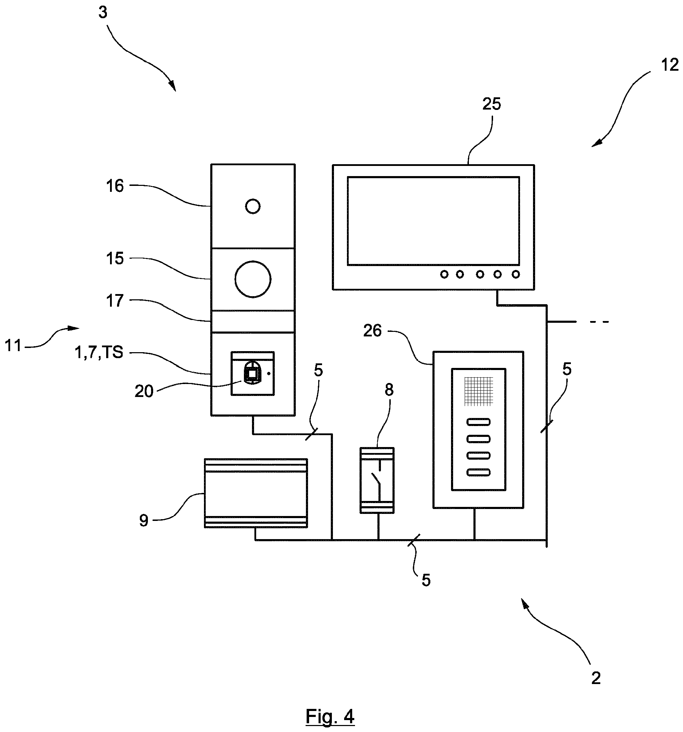

Fig. 4 zeigt eine weitere Anwendungsform der Busversorgungskomponente 1 an einem beispielhaften Schaltplan eines Zutrittskontrollsystems 3 im Betrieb der Busversorgungskomponente 1 in einer Türstation 11. Dabei ist die als Leseeinheit 7 ausgebildete Busversorgungskomponente 1 mit einem Fingerprint-Sensor 20 ausgestattet und neben weiteren Modulen mit gleichem Formfaktor in eine Türstation 11 integriert und an diese über die dritte elektrische Schnittstelle TS angeschlossen. Das erste und das zweite Klemmenpaar ZV, BUS sind dabei nicht angeschlossen. Die weiteren Module der Türstation 6 sind ein Kameramodul 16 sowie ein Sprechmodul 15 mit darin integriertem Ruftastenmodul 17. Das Bussystem 2 weist ferner zwei Wohnungsstationen 12 auf, unter anderem eine Video-Wohnungsstation 25 und zum anderen eine Audio-Wohnungsstation, welche beide an die Busleitung 5 angeschlossen sind. Darüber hinaus weist das Bussystem den Aktor 8 mit Relais 10 zum Betätigen der Türschließeinrichtung sowie ein zentrales Busnetzteil 9 auf. Dieses versorgt im vorliegenden Fall sämtliche Systemkomponenten mit Strom, einschließlich der Busversorgungskomponente 1.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Busversorgungskomponente
- 2: Bussystem
- 3: Zutrittskontrollsystem
- 4: handelsübliches Netzteil
- 5: Busleitung
- 6: Stromleitung der Busversorgungskomponente
- 7: Leseeinheit
- 8: Aktor
- 9: Zentrales Busnetzteil
- 10: Relais
- 11: Türstation
- 12: Wohnungsstation
- 15: Sprechmodul
- 16: Kameramodul
- 17: Ruftastenmodul
- 18: Entkopplungsimpedanz
- 19: Frontplatte
- 20: Fingerprint-Sensor
- 21: Drehriegel
- 22: Schrauben
- 23: Buskomponente
- 24: Tasterschnittstelle
- 25: Video-Wohnungsstation
- 26: Audio-Wohnungsstation
- BUS: zweites Klemmenpaar
- TS: dritte elektronische Schnittstelle
- ZV: erstes Klemmenpaar

## Patentansprüche

1. Busversorgungskomponente (1) zur Verwendung in einem Bussystem (2) eines Zutrittskontrollsystems (3) für ein Gebäude,
mit einer Entkopplungsimpedanz (18) zur Entkopplung von Datensignalen von einer Versorgungsspannung,
mit einem ersten Klemmenpaar (ZV) zum Anschließen der Busversorgungskomponente (1) an ein handelsübliches Netzteil (4);
und mit einem zweiten Klemmenpaar (BUS) zum Anschließen der Busversorgungskomponente (1) an eine Busleitung (5),
wobei die Busversorgungskomponente (1) dazu eingerichtet ist, über das zweite Klemmenpaar (BUS) eine Datenverbindung mit zumindest einer weiteren an das Bussystem (2) angeschlossenen elektronischen Komponente zu ermöglichen, und
wobei die Busversorgungskomponente (1) dazu eingerichtet ist, über das zweite Klemmenpaar (BUS) wahlweise
a) eine Versorgungsspannung für die zumindest eine weitere elektronische Komponente bereitzustellen; oder
b) eine Versorgungsspannung für die Elektronik der Busversorgungskomponente (1) zu erhalten; oder
c) keinen Spannungseingang oder Spannungsausgang bereitzustellen.

2. Busversorgungskomponente (1) nach Anspruch 1, wobei das erste Klemmenpaar (ZV) zum Anschließen an eine mit einem Netzteil verbundene zweiadrige Leitung (6) und das zweite Klemmenpaar (BUS) zum Anschließen an eine Zweidraht-Busleitung (5) ausgebildet sind.

3. Busversorgungskomponente (1) nach Anspruch 1 oder 2, welche dazu ausgebildet ist, dass die Elektronik der Busversorgungskomponente (1) bei Erkennung des Vorhandenseins einer Versorgungsspannung am ersten Klemmenpaar (ZV) über das erste Klemmenpaar (ZV) mit Spannung versorgt ist, und bei Erkennung keiner Versorgungsspannung am ersten Klemmenpaar (ZV) über das zweite Klemmenpaar (BUS) mit Spannung versorgt ist.

4. Busversorgungskomponente (1) nach Anspruch 3, wobei die Erkennung des Vorhandenseins einer Versorgungsspannung automatisch durch Erkennung einer Busspannung am zweiten Klemmenpaar (BUS) oder über eine Bedienroutine bei der Inbetriebnahme der Busversorgungskomponente (1) erfolgt.

5. Busversorgungskomponente (1) nach einem der Ansprüche 1 bis 4, wobei die Busversorgungskomponente (1) ferner eine dritte elektrische Schnittstelle (TS) zum Integrieren der Busversorgungskomponente (1) in eine modulare Türstation (11) aufweist.

6. Busversorgungskomponente (1) nach Anspruch 5, wobei die dritte elektrische Schnittstelle (TS) zum Anschließen an eine mehradrige Busleitung ausgebildet ist.

7. Zutrittskontrollsystem (3) für ein Gebäude,
mit einer Mehrzahl über ein Bussystem (2) miteinander gekoppelter Komponenten, welche zumindest eine Leseeinheit (7) und einen Aktor (8) umfassen, wobei die Leseeinheit (7) über eine Busleitung (5) mit dem Aktor (8) zum Ansteuern einer Türschließeinrichtung verbunden ist, wobei die Leseeinheit (7) dazu eingerichtet ist, im Falle einer erfolgreichen Authentifizierung ein Zugangsberechtigungssignal über die Busleitung (5) an den Aktor (8) zu übertragen, und wobei der Aktor (8) dazu eingerichtet ist, ein entsprechendes Steuersignal zur Ansteuerung der Türschließeinrichtung zu erzeugen und das Steuersignal an diese zur Freigabe der Türe zu übertragen,
**dadurch gekennzeichnet, dass** die Leseeinheit (7) und/oder der Aktor (8) als eine Busversorgungskomponente (1) nach einem der Ansprüche 1 bis 4 ausgebildet ist.

8. Zutrittskontrollsystem (3) nach Anspruch 7, wobei die Busversorgungskomponente (1) an ein handelsübliches Netzteil (4) angeschlossen ist, mittels welchem eine Versorgungsspannung zur Speisung der Busversorgungskomponente (1) und/oder zumindest einer weiteren Komponente des Bussystems (2) bereitstellbar ist.

9. Zutrittskontrollsystem (3) nach Anspruch 8, wobei das erste Klemmenpaar (ZV) an das Netzteil (4) angeschlossen und das zweite Klemmenpaar (BUS) an das Bussystem (2) angeschlossen ist, wobei über das zweite Klemmenpaar (BUS) die zumindest eine weitere Komponente mit einer Versorgungsspannung gespeist ist und/oder das zweite Klemmenpaar (BUS) zur Datenübertragung zwischen der Busversorgungskomponente (1) und der zumindest einen weiteren Komponente ausgebildet ist.

10. Zutrittskontrollsystem (3) nach einem der Ansprüche 7 bis 9, wobei das Bussystem (2) ferner ein zentrales Busnetzteil (9) zum Bereitstellen einer Versorgungsspannung für zumindest einen Teil der Komponenten aufweist.

11. Zutrittskontrollsystem (3) nach einem der Ansprüche 7 bis 10, wobei die in der Busversorgungskomponente (1) enthaltene Elektronik direkt aus dem über das erste Klemmenpaar (ZV) angeschlossenen Netzteil (4) mit Spannung versorgt wird.

12. Zutrittskontrollsystem (3) nach einem der Ansprüche 7 bis 11, wobei das Zutrittskontrollsystem (3) zumindest eine zweite als Busversorgungskomponente (1) ausgebildete Leseeinheit (7) und/oder zumindest einen zweiten als Busversorgungskomponente (1) ausgebildeten Aktor (8) aufweist, und wobei die zumindest eine zweite Busversorgungskomponente (1) über deren zweites Klemmenpaar (BUS) an das Bussystem (2) angeschlossen ist, wobei die Spannungsversorgung der internen Elektronik der zweiten Busversorgungskomponente (1) durch das zentrale Busnetzteil (9) oder alternativ durch die erste Busversorgungskomponente (1) über das zweite Klemmenpaar (BUS) erfolgt.

13. Zutrittskontrollsystem (3) nach einem der Ansprüche 7 bis 12, wobei im Aktor (8) ein über die Leseeinheit (7) ansteuerbares Relais (10) angeordnet ist, wobei der Aktor (8) sowie das oder die Netzteile (4, 9) innerhalb eines Gebäudes angeordnet sind.

14. Zutrittskontrollsystem (3) nach einem der Ansprüche 7 bis 13, wobei die Leseeinheit (7) außerhalb eines Gebäudes im Bereich einer zu sichernden Türe angeordnet ist.

15. Zutrittskontrollsystem (3) nach einem der Ansprüche 7 bis 14, wobei das Zutrittskontrollsystem (3) ferner eine die Leseeinheit (7) aufweisende Türstation (11) und eine Wohnungsstation (12) aufweist.

16. Zutrittskontrollsystem (3) nach Anspruch 15, wobei die Türstation (11) eine Mehrzahl Steckplätze (13) für einen gleichen Formfaktor aufweisende Türstationskomponenten (14), wie beispielsweise ein Sprechmodul (15), ein Kameramodul (16) und/oder ein Ruftastenmodul (17), aufweist, wobei die Leseeinheit (7) in einen der Steckplätze (13) eingesteckt ist und über die dritte elektrische Schnittstelle (TS) mit der Türstation (11) und den ggf. weiteren Türstationskomponenten (14) gekoppelt ist.

17. Zutrittskontrollsystem (3) nach einem der vorangehenden Ansprüche, wobei die Entkopplungsimpedanz (18) zwischen dem ersten Klemmenpaar (ZV) und dem zweiten Klemmenpaar (BUS) geschaltet ist.
